# EUROPEAN PATENT APPLICATION

(11) **EP 4 552 903 A1**
(43) Date of publication of application: **14.05.2025**
(21) Application number: 23208471.5
(22) Date of filing: 08.11.2023
(51) Int. Cl.: B60L 50/75, B60L 58/13, B60L 58/40, B60L 3/00, H01M 8/04111, H01M 8/0432, H01M 8/04537, H01M 8/04701, H01M 8/04858, H01M 10/44, H01M 16/00, B60L 1/00, B60L 58/30

(54) **CONTROL OF A VEHICLE FUEL CELL SYSTEM DURING A VEHICLE STOP**

(71) Applicant: VOLVO TRUCK CORPORATION, 405 08 Göteborg (SE)
(72) Inventor: DESAI, Parthav, 417 28 GÖTEBORG (SE)
(74) Representative: Ström & Gulliksson AB

(57) **Abstract**

A computer system (100) for controlling a fuel cell system (20) during a vehicle stop of a vehicle (10), the computer system (100) comprising processing circuitry (102) configured to: obtain a stop duration of the vehicle stop; calculate a storage capacity of a vehicle battery (32) of the vehicle (10) as a difference between a current state of charge of the vehicle battery (32) and a target state of charge of the vehicle battery (32) at the end of the stop duration; calculate a battery charging energy for the vehicle battery (32) based on the storage capacity; determine a maximum feasible fuel cell power output of the fuel cell system (20) for charging the vehicle battery (32) using the battery charging energy; and control a charging mode of the fuel cell system (20) based on the maximum feasible fuel cell power.

## Description

### TECHNICAL FIELD

The disclosure relates generally to vehicle energy management. In particular aspects, the disclosure relates to control of a vehicle fuel cell system during a vehicle stop. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A fuel cell electric vehicle, hereinafter abbreviated FCEV, is a vehicle operating by using a fuel cell stack that converts hydrogen into electricity to power an electric motor for propelling the FCEV. During operation, the FCEV typically experiences a plurality of stops where the vehicle speed is zero. Vehicle stops may be caused by e.g., mandatory stops, fuel refill stops, lunch stops, or stops caused by traffic congestion, accidents, traffic signals, and the like. Frequent vehicle stops negatively affect the durability and lifetime expectancy of the fuel cell system of the FCEV. It is thus desired to reduce the degradation of fuel cell performance by controlling the FCEV behaviour during vehicle stops.

### SUMMARY

According to a first aspect of the disclosure there is provided a computer system for controlling a fuel cell system during a vehicle stop of a vehicle, the computer system comprising processing circuitry configured to: obtain a stop duration of the vehicle stop; calculate a storage capacity of a vehicle battery of the vehicle as a difference between a current state of charge of the vehicle battery and a target state of charge of the vehicle battery at the end of the stop duration; calculate a battery charging energy for the vehicle battery based on the storage capacity; determine a maximum feasible fuel cell power output of the fuel cell system for charging the vehicle battery using the battery charging energy; and control a charging mode of the fuel cell system based on the maximum feasible fuel cell power. The first aspect of the disclosure may seek to reduce fuel cell degradation performance. A technical benefit may include an improved efficiency, lifespan, responsiveness, safety, and adaptability to different fuels and loads.

Optionally in some examples, including in at least one preferred example, the processing circuitry is configured to control the charging mode by: setting the charging mode to an active mode or an inactive mode based on a value of the maximum feasible fuel cell power output in relation to a minimum power limit of the fuel cell system.

Optionally in some examples, including in at least one preferred example, the active mode includes a maximum feasible throughput mode, an adjusted throughput mode, a varying throughput mode, or a minimum feasible throughput mode. A technical benefit may include setting different types of active modes of the fuel cell system for different scenarios, thus increasing the flexibility and versatility of the control procedure.

Optionally in some examples, including in at least one preferred example, the inactive mode includes an at least partial shutdown mode. A technical benefit may include setting a specific type of inactive modes of the fuel cell system for different scenarios, thus increasing the flexibility and versatility of the control procedure.

Optionally in some examples, including in at least one preferred example, the active mode or the inactive mode is further associated with a delayed mode for delaying the activation of either one of the active mode or the inactive mode. A technical benefit may include a further improved control of the charging mode.

Optionally in some examples, including in at least one preferred example, the processing circuitry is further configured to employ an optimization model being configured to: receive input data pertaining to the vehicle battery and the stop duration, process said input data, and set the charging mode based on the processed input data. A technical benefit may include an improved accuracy in determining correct charging modes.

Optionally in some examples, including in at least one preferred example, the target state of charge is dependent on at least one driving property of the vehicle and/or environment where the vehicle will be driving after the stop duration has elapsed, the driving property being a slope of a road, a road surface condition, a traffic situation or an ambient condition. A technical benefit may include an improved determination of the target state of charge depending on prevailing driving conditions.

Optionally in some examples, including in at least one preferred example, the processing circuitry is configured to calculate the battery charging energy as a product of the storage capacity and a nominal capacity of the vehicle battery. A technical benefit may include obtaining a more accurate representation of the battery charging energy such that control of the fuel cell system is improved.

Optionally in some examples, including in at least one preferred example, the maximum feasible fuel cell power for charging the vehicle battery is further based on energy losses of one or more auxiliary vehicle systems of the vehicle. A technical benefit may include a more accurate prediction of the maximum feasible fuel cell power depending on vehicle subsystems such that control of the fuel cell system is improved.

Optionally in some examples, including in at least one preferred example, the maximum feasible fuel cell power for charging the vehicle battery is limited by fuel limitations of the fuel cell system. A technical benefit may include a more accurate prediction of the maximum feasible fuel cell power depending on vehicle subsystems such that control of the fuel cell system is improved.

Optionally in some examples, including in at least one preferred example, the maximum feasible fuel cell power for charging the vehicle battery is limited by safety parameters of the vehicle. A technical benefit may include a more accurate prediction of the maximum feasible fuel cell power depending on vehicle subsystems such that control of the fuel cell system is improved.

According to a second aspect of the disclosure there is provided a vehicle comprising the computer system of the first aspect. The second aspect of the disclosure may seek to reduce fuel cell degradation performance. A technical benefit may include an improved efficiency, lifespan, responsiveness, safety, and adaptability to different fuels and loads.

According to a third aspect of the disclosure there is provided a computer-implemented method for controlling a fuel cell system during a vehicle stop of a vehicle, comprising: obtaining , by processing circuitry of a computer system, a stop duration of the vehicle stop; calculating, by the processing circuitry, a storage capacity of a vehicle battery of the vehicle as a difference between a current state of charge of the vehicle battery and a target state of charge of the vehicle battery at the end of the stop duration; calculating, by the processing circuitry, a battery charging energy for the vehicle battery based on the storage capacity; determining, by the processing circuitry, a maximum feasible fuel cell power output of the fuel cell system for charging the vehicle battery using the battery charging energy; and controlling, by the processing circuitry, a charging mode of the fuel cell system based on the maximum feasible fuel cell power. The third aspect of the disclosure may seek to reduce fuel cell degradation performance. A technical benefit may include an improved efficiency, lifespan, responsiveness, safety, and adaptability to different fuels and loads.

According to a fourth aspect of the disclosure there is provided a computer program product comprising program code for performing, when executed by the processing circuitry, the method of the third aspect. The fourth aspect of the disclosure may seek to reduce fuel cell degradation performance. A technical benefit may include an improved efficiency, lifespan, responsiveness, safety, and adaptability to different fuels and loads.

According to a fifth aspect of the disclosure there is provided a non-transitory computer-readable storage medium comprising instructions, which when executed by the processing circuitry, cause the processing circuitry to perform the method of the third aspect. The fifth aspect of the disclosure may seek to reduce fuel cell degradation performance. A technical benefit may include an improved efficiency, lifespan, responsiveness, safety, and adaptability to different fuels and loads.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a fuel cell electric vehicle.
**FIG. 2** is an exemplary system diagram generally depicting data used for controlling a charging mode of a fuel cell system based on a maximum feasible fuel cell power.
**FIG. 3** is an exemplary illustration of different charging modes that the fuel cell system can be set to.
**FIG. 4** is an exemplary illustration of a method for controlling a battery state of charge.
**FIG. 5** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

As discussed in the background section, vehicle stops negatively affect the durability and lifetime expectancy of the fuel cell system of the FCEV. Frequently deactivating the fuel cell and operating it at low power levels both contribute to the degradation of the fuel cell. Therefore, an objective of the present disclosure is to maximize the power limit at which the fuel cell runs. However, it's important to strike a balance because the higher the power output of the fuel cell when the vehicle is stationary, the more likely it is that the battery will reach its capacity, necessitating a pause in fuel cell operation. A further object is therefore to push the power output as high as possible without reaching a point where the battery is fully charged. A problem to be solved by the present disclosure may thus be seen in how to reduce the degradation of fuel cell performance. The present disclosure can be seen as a way of controlling the FCEV during a vehicle stop based on knowledge of the duration of the vehicle stop.

A typical scenario that can be realized is the FCEV driving on a road and eventually arriving at a vehicle stop (i.e., a standstill where the motion of the FCEV is zero). Data pertaining to a duration of the vehicle stop is then obtained at the vehicle stop. Based on the duration of the stop, a storage capacity of a vehicle battery is calculated as a difference between a current state of charge of the vehicle battery and a target state of charge of the vehicle battery. The target state of charge is in this case the state of charge upon the end of the stop duration, i.e., a time when the FCEV proceeds to drive from a standstill mode. Based on the calculated storage capacity, a battery charging energy is calculated. The battery charging energy is energy that the vehicle battery can be charged with during the vehicle stop, i.e., from a start to an end thereof. Then a maximum feasible fuel cell power output of a fuel cell system is determined. The maximum feasible fuel cell power output is the feasible power output from a fuel cell system for charging the vehicle battery using the calculated battery charging energy. Finally, a charging mode of the fuel cell system is controlled based on the maximum feasible fuel cell power output.

This approach may effectively predict how the fuel cell system is to be controlled during the time when the FCEV is stationary at the vehicle stop, i.e., how the power output from the fuel cell system is to be determined. Determining how to control the power output of the fuel cell system impacts its efficiency, lifespan, responsiveness, safety, and adaptability to different fuels and loads. Fuel cell performance degradation is thus mitigated.

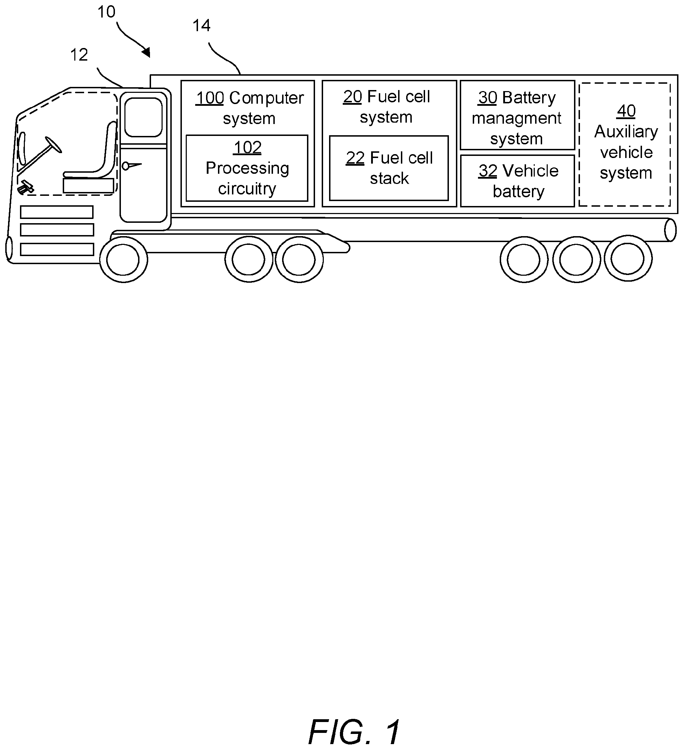

**FIG. 1** is an exemplary schematic illustration of an FCEV **10**. The FCEV **10** is illustrated as a heavy-duty vehicle, but other vehicle types may be used. The FCEV **10** comprises a tractor unit **12** which is arranged to tow a trailer unit **14**. In other examples, other heavy-duty vehicles may be employed, e.g., trucks, buses, and construction equipment. The FCEV **10** comprises vehicle units and associated functionality as would be understood and expected by a skilled person, such as a powertrain, chassis, and various control systems.

The FCEV **10** comprises a fuel cell system **20** having a fuel cell stack **22** with a plurality of fuel cells. The units of the FCEV **10** are depicted as being arranged in the trailer unit **14**, but this is just for illustrative purposes. The units are typically arranged in the tractor unit **12**. The fuel cell system **20** is adapted to convert chemical energy stored in a fuel, typically hydrogen, as well as an oxidizing agent, typically oxygen or air, into electricity and heat as a byproduct through continuous electrochemical reactions. The generated electric current is used to power an electric motor (not shown) for propulsion purposes, charge a vehicle battery **32**, and/or power auxiliary vehicle systems **40** of the FCEV **10**. At the same time, a reduction reaction occurs at the cathode where oxygen is supplied in combination with the protons and electrons from the external circuit to form water.

The FCEV **10** comprises a battery management system **30** and a vehicle battery **32**. The battery management system **30** is adapted to monitor, protect and optimize the performance of the vehicle battery **32**, thereby ensuring safe and efficient operation and prolonging the lifetime expectancy of the vehicle battery **32**. The vehicle battery **32**, being for instance a lithium-ion battery, is used to store electrical energy in the form of chemical energy. The vehicle battery **32** is rechargeable and adapted to provide a source of electricity for an electric motor of the FCEV **10**. The vehicle battery **32** may serve as an energy buffer for obtaining surplus electricity generated by the fuel cell system **20** beyond what the electric motor currently needs. The surplus energy stored in the vehicle battery **32** may subsequently be used for powering the electric motor, or other auxiliary power systems **40**, of the FCEV **10**. Hence, by combining the fuel cell system **20** and the vehicle battery **32**, a power supply system for the FCEV **10** is realized.

The FCEV **10** comprises one or more auxiliary vehicle systems **40**. The auxiliary vehicle systems **40** provide additional functionalities beyond the primary power source of the FCEV **10**, i.e., the electric motor. Auxiliary vehicle systems **40** may include one or more of power take-off (PTO) systems, motion management systems, predictive controllers, hydraulic systems, air compression systems, auxiliary generators, cooling systems, power steering systems, air conditioning systems, auxiliary lighting systems, infotainment systems, and the like. The auxiliary vehicle systems **40** are associated with respective auxiliary power consumptions that affect the operation of the FCEV **10**.

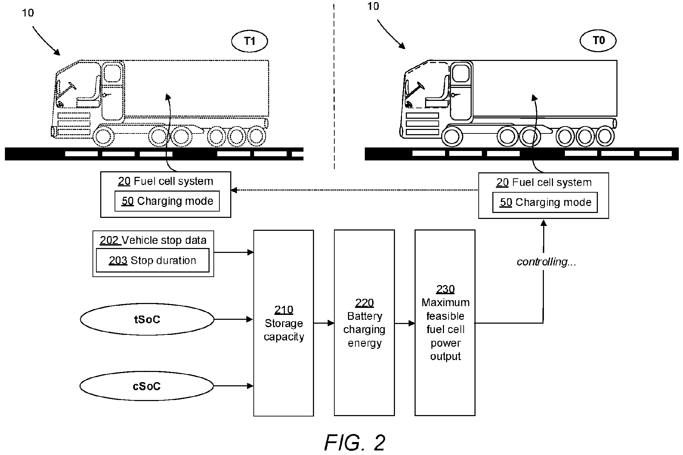

The FCEV **10** comprises a computer system **100** having processing circuitry **102**. In some optional implementations, operations of the processing circuitry 102 is carried out external to the FCEV **10**, for instance by a cloud-computing service. In these implementations, the FCEV **10** involves a communication module configured to receive and send information to and from the cloud-computing service. The computer system **100** is configured for controlling a charging mode of the fuel cell system **20**. The processing circuitry **102** is configured to obtain a stop duration of an vehicle stop of the FCEV **10**. The processing circuitry **102** is further configured to calculate a storage capacity of the vehicle battery **32** of the FCEV **10** as a difference between a current state of charge, cSoC, of the vehicle battery **32** and a target state of charge, tSoC, of the vehicle battery **32** at the end of the stop duration. The processing circuitry **102** is further configured to calculate a battery charging energy for the vehicle battery **32** based on the storage capacity. The processing circuitry **102** is further configured to determine a maximum feasible fuel cell power output of the fuel cell system **20** for charging the vehicle battery **32** using (or by, or based on) the battery charging energy. The processing circuitry **102** is further configured to control a charging mode of the fuel cell system **20** based on the maximum feasible fuel cell power. This procedure will now be explained in detail with further reference to **FIG. 2**.

**FIG. 2** is an exemplary schematic illustration of controlling a charging mode **50** of a fuel cell system. The FCEV **10** is at time T0 at a standstill (i.e., with a motion equal to zero). Preferably, time T0 corresponds to the start of the vehicle stop, although it may also be any time prior to the end of the vehicle stop. For example, the FCEV **10** may arrive at the vehicle stop before time T0, but carry out control of the charging mode **50** after some arbitrary time period during the vehicle stop. The time T1 corresponds to the end of the vehicle stop, i.e., when the FCEV **10** will transition from a standstill mode to a driving mode. The time T0 is therefore temporally prior to the time T1. During the time period between time T0 and time T1, the FCEV **10** is at a standstill and carries out control of the charging mode **50** of the fuel cell system **20** based on various calculations and determinations performed by the processing circuitry **102**.

The control procedure involves obtaining a stop duration **203** of the vehicle stop. The stop duration **203** can be included in vehicle stop data **202** including additional information pertaining to the vehicle stop, such as geographical information, reasons for the stop, outcomes of the stop, and the like. The stop duration **203** may be obtained in various different ways.

The stop duration **203** may be obtained from a navigation system. The navigation system may be arranged in the FCEV **10**. The navigation system may provide updates, optionally in near-real time, of upcoming stops. For example, GPS data may indicate that there is an accident occurring at the road on which the FCEV **10** is driving such that a vehicle stop will have to be carried out in, for instance, 30 minutes. Data provided by the navigation system may further indicate that the vehicle stop duration **203** will be, for instance, approximately 30 minutes long. Other similar scenarios may be envisaged where the navigation system provides data pertaining to the stop duration **203** of the upcoming stop.

The stop duration **203** may be obtained from a mission management system. The mission management system may provide various types of data that determines, or can be used for determining, the stop duration **203**, including but not limited to real-time sensor data (images, video feeds, sensor readings, telemetry data, etc.), weather and environmental data (temperature, humidity, wind speed, precipitation, etc.), safety and security-related data (non-driving zones, vehicle locations, etc.), resource utilization data (fuel consumption, power usage, equipment status, etc.).

The stop duration **203** may be obtained from a prediction algorithm. Generally, prediction algorithms, also known as predictive algorithms or predictive models, are computational approaches for predicting future events or outcomes based on historical data and patterns. Such events may be upcoming vehicle stops in this case. The prediction algorithm may input data from, for instance, one of the navigation system or the mission management system. The prediction algorithm may output a predicted vehicle stop having a predicted duration. In some examples, the prediction algorithm is implemented as a machine learning model. The neural network may implement backpropagation for training purposes such that its performance for identifying upcoming vehicle stops may be improved.

The stop duration **203** may be obtained based on regulatory requirements. For example, regulatory requirements may specify that the FCEV **10** shall not be operational for a longer time period than, for instance, a certain number of hours. In that case, an upcoming stop may be scheduled with an associated duration.

The stop duration **203** may be obtained from user input. In some examples the user may be aware of when the stop is due but the system is not. In these examples, the user typically also knows an approximate duration of the stop. Such scenarios may involve when the driver feels like a stop should be necessary, e.g., due to lunch or toilet breaks and the like. The user input may be received from a user interface. The user interface may be provided as a graphical monitor in the vehicle or at a driver's mobile device. The user interface may be connected to the computer system **100** through wired or wireless means. The user interface may be an auditory interface such that the user can provide voice prompts. The user interface may be a physical button that can be actuated by the user to trigger the stop prediction, optionally having one or more additional inputs for specifying the duration thereof. In other examples the stop duration may be a default duration of a particular time period.

Any one or a combination of the above ways of obtaining the stop duration **203** may be envisaged in various examples of the present disclosure.

The control procedure further involves calculating a storage capacity **210** of the vehicle battery **32**. The storage capacity **210** is the capacity of the vehicle battery **32** between the current time and the time upon when the FCEV **10** leaves the vehicle stop. The storage capacity **210** is calculated by a difference between a tSoC when the FCEV **10** leaves the vehicle stop and the cSoC.

The cSoC may be obtained from the battery management system **30** and/or an auxiliary vehicle system **40** of the FCEV **10**. The battery management system **30** is configured to monitor data such as voltage, current and temperature within the vehicle battery **32**. Based on this information, the battery management system **30** can calculate the cSoC and the computer system **100** obtain it accordingly. The auxiliary vehicle system **40** may be any of the systems as described above. The cSoC may be obtained from sensor data, output from a battery model, voltage SoC lookup tables, and the like, associated with the auxiliary vehicle system **40**.

The tSoC is a desired value of the state of charge upon the FCEV **10** leaving the vehicle stop. The tSoC may be a maximum allowed state of charge, mSoC, of the vehicle battery **32**. The mSoC is the highest percentage of the vehicle battery's **32** nominal capacity that it is allowed to be charged to. The nominal capacity is the amount of electrical charge (typically expressed in ampere-hours (Ah)) that the vehicle battery **32** can deliver under specified conditions of temperature and discharge rate. The mSoC is set by the battery manufacturer to protect the battery from damage and to extend its lifespan. The mSoC is therefore typically lower than the nominal capacity of the vehicle battery **32** because charging the battery to its full capacity can reduce its lifespan and increase the risk of failure. For example, a lithium-ion battery with a nominal capacity of 100 Ah may have a mSoC of 90 Ah. This means that the battery should not be charged to more than 90% of its full capacity. The difference between a battery's nominal capacity and its mSoC can affect the usable capacity of the battery, i.e., a battery charging energy. In other examples the tSoC may alternatively be a value close to the mSoC, such as 90% of the mSoC, 80% of the mSoC, and the like. The tSoC may be obtained as one or more inputs from the battery management system **30**, such as from sensor data, output from a battery model, voltage SoC lookup tables, and the like.

The tSoC may be dependent on at least one driving property of the FCEV **10** and/or environment where the FCEV **10** will be driving after the stop duration **203** has elapsed. To this end, different tSoCs may be desired in different driving conditions.

The driving property may be a slope of a road. As an example, if it is predicted that the upcoming road is associated with a plurality of downhill road segments, the tSoC possibly does not have to be as high as would have been necessary for the opposite situation, i.e., where the upcoming road is associated with many uphill road segments. This is because the FCEV **10** typically consumes more energy in areas where there are many uphill road segments compared to downhill road segments. The driving property may be a road surface condition. The road surface condition may be a level of slipperiness, precipitation, iciness, wetness, gravel or loose stones present on the road surface, potholes, oil slicks, uneven or banked curves, and the like. The driving property may be a traffic situation. The traffic situation may be stop-and-go traffic, intersections with traffic lights, lane merges, roundabouts, school zones, crosswalks, railroad crossings, highway exits, accidents, and the like. The driving property may be an ambient condition. The ambient condition may be a visibility, weather condition (rain, snow, etc.), lighting condition, and the like. The driving property may be obtained from a mission management system, a weather service, and the like.

Based on the calculated storage capacity **210**, a battery charging energy **220** is calculated. The battery charging energy **220** is the energy the vehicle battery **32** is to be charged with between the times T0 and T1, in other words the energy that the vehicle battery **32** can be charged with during the vehicle stop, i.e., from a start (as determined by the obtaining of the cSoC) to an end thereof. The battery charging energy **220** may be calculated as a product of the calculated storage capacity **210** and a nominal capacity of the vehicle battery **32**.

Based on the calculated battery charging energy **220**, a maximum feasible fuel cell power output **230** is calculated. The maximum feasible fuel cell power output **230** is the feasible power output from the fuel cell system **20** for charging the vehicle battery **32** using the calculated battery charging energy **220**. The term "feasible" may in this context be interpreted as a practically implementable power output without overcharging the battery during the stop, thereby implying that the power is not only theoretically possible but also reasonable and effective in practical uses. In most situations, the vehicle battery **32** may be charged fully at a certain power level, which is less than the maximum power that the fuel cell system can produce. To this end, calculating the maximum feasible fuel cell power output **230** may involve considering factors such as the design and capacity of the fuel cell stack **22**, the availability and quality of the fuel source (e.g., hydrogen), operating temperatures and pressures, and control strategies determined by the computer system **100** and other vehicle systems of the FCEV **10**, such as the auxiliary vehicle systems **40**.

In some examples, the maximum feasible fuel cell power output **230** depends on an upper limit of power generation that can be reasonably attained without exceeding fuel limitations, safety parameters, and/or operational constraints of the fuel cell system **20**. The fuel limitations may relate to a fuel type, fuel concentration, fuel purity, fuel supply, fuel storage, fuel processing, and the like. The safety parameters may relate to temperature limits, pressure limits, electrical overload data, cooling data, gas leak data, pressure relive valve data, and the like. This data may be interpreted as an efficiency factor affecting the operation of the fuel cell system **20**.

In some examples, the maximum feasible fuel cell power output **230** is further based on energy losses of the one or more auxiliary vehicle systems **40**. The energy losses may involve losses that are caused while the vehicle **10** is stationary, such as due to idle fuel consumption, climate control systems, environmental conditions, parasitic loads, and other losses from electrical, heat or sensory systems. Therefore, in examples where the energy losses is considered, the maximum feasible fuel cell power output **230** may alternatively be calculated by dividing the battery charging energy **220** with the stop duration **203**, and then adding any auxiliary power consumption of auxiliary vehicle systems **40** that affect the FCEV **10**. Optionally, the result of this calculation may be adjusted based on the efficiency factor, as discussed above.

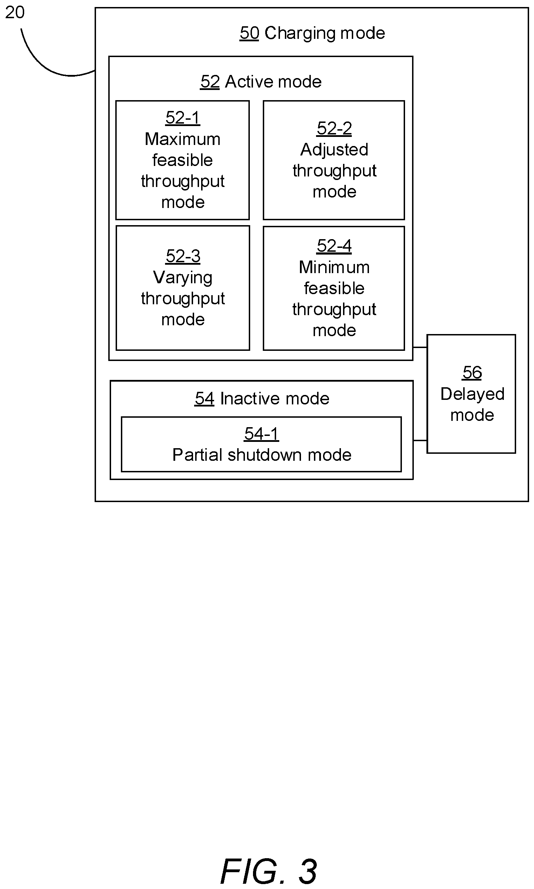

Based on the determined maximum feasible fuel cell power, the fuel cell power system **20** is controlled accordingly. More specifically, the charging mode **50** of the fuel cell system **20** is controlled. This is further shown in **FIG.** 3 according to some examples. The charging mode **50** can be interpreted as how to configure the fuel cell system **20** by controlling its power output. The charging mode **50** may be one of an active mode **52** or an inactive mode **54**. The active mode **52** may be separated into several categories including but not limited to a maximum feasible throughput mode **52-1**, an adjusted throughput mode **52-2**, a varying throughput mode **52-3**, or a minimum feasible throughput mode 52-4. The inactive mode **54** may be separate into one or more categories including an at least partial shutdown mode **54-1**.

Charging modes **50** may be determined by employing an optimization model. The optimization model receives input data pertaining to the vehicle battery **32** and the stop duration **203**, and this input data is subsequently processed. The optimization model may also receive input data pertaining to the fuel cell system **20** including power limits, degradation rates under different conditions, and the like. The input data pertaining to the vehicle battery **32** may relate to a voltage, current, capacity, SoC, SoH, temperature, impedance, self-discharge rate, cycle life, power/energy density, and the like. In some examples, the optimization model receives additional input data that can be taken into account for determining the charging modes **50**, said additional input data pertaining to weather data obtained from a weather forecast service. Additional input data may alternatively or additionally include data obtained from a mission management system. In some examples, the optimization model is implemented as a machine learning model, such as a neural network. The neural network may implement backpropagation for training purposes such that its performance for more accurately setting the charging mode **50** can be improved.

The maximum feasible throughput mode **52-1** involves controlling the output from the fuel cell system **20** to deliver the maximum feasible power output **230** to the vehicle battery **32**.

The adjusted throughput mode **52-2** involves controlling the output from the fuel cell system **20** to deliver a maximum feasible power at an adjusted level to the vehicle battery **32**. The adjusted level may for example be determined by multiplying the maximum feasible power output **230** with a certain efficiency factor. The adjusted level may depend on various different conditions, such as one or more of the conditions described with reference to the maximum feasible fuel cell power output **230**.

The varying throughput mode **52-3** involves controlling the output from the fuel cell system **20** to deliver the maximum feasible power output **230**, optionally with an adjusted level thereof, at a varying level. What this generally means is that the fuel cell system **20** is configured to charge the vehicle battery **32** by the maximum feasible fuel cell power output **230**, optionally with an adjusted level, at one or more time periods during the stop duration. The variation in the varying throughput mode **52-3** may depend on the dynamic behaviour of the fuel cell system **20**. This may occur because of a goal to maintain a safety margin by not fully charging the battery right at the end of the vehicle stop, among other possible reasons.

The minimum feasible throughput mode **52-4** involves controlling the output from the fuel cell system **20** to deliver the minimum feasible power without requiring restart or shutdown of the fuel cell system **20**, i.e., a minimum power limit of the fuel cell system **20**. The minimum power limit corresponds to the lowest power level at which the fuel cell system **20** can operate stably and efficiently. The minimum power limit may depend on a number of factors, including but not limited to the type of fuel cell, the operating temperature and pressure, and the system design of the fuel cell system **20**. One exemplary factor that may determine the minimum power limit is the activation energy of the fuel cell reaction. It has been realized that the degradation of the fuel cell system **20** accelerates when it operates at lower power output levels. As a result, a minimum power limit is established, guided by the need to ensure a satisfactory lifespan. This is the energy required to start the reaction that produces electricity. At low power levels, the fuel cell may not be able to generate enough heat to maintain the activation energy, and the system will become unstable and possibly inoperative. Another exemplary factor that affects the minimum power limit is the system's efficiency. At low power levels, the system may not be able to operate efficiently, and a significant portion of the fuel may be wasted. This can lead to increased emissions and reduced fuel economy. Although the minimum power limit may vary for different types of FCEVs and fuel cell systems, the minimum power limit of a fuel cell system is typically around 10-20% of the system's rated power (i.e., maximum power output that the fuel cell system can deliver, typically expressed in watts (W)). However, this can vary depending on the factors mentioned above.

The partial shutdown mode **54-1** involves performing an at least partial shutdown of the fuel cell system **20** at one or more time periods during the stop duration. The at least partial shutdown may be a complete shutdown of one or more parts of the fuel cell system **20**, such as a subset of fuel cells. In this mode **54-1 one** or more parts of the fuel cell system **20**, such as a subset of fuel cells, may be at least partially deactivated during the stop duration. This may be carried out for purposes of energy management, power savings, maintenance, safety, and so forth.

In some examples, the fuel cell system **20** may be controlled by a sub-mode of an active mode **52** and a sub-mode of an inactive mode **54** at the same time. Such an example may be a partial shutdown of the fuel cell system **20** while other parts of the fuel cell system **20** operates according to one or more of the sub-modes to the active mode **52**. Hence, a first one of the active sub-modes **52-1, 52-2, 52-3, 52-4,** or the inactive sub-mode **54-1,** may be set for parts of the fuel cell system **20** (such as a first subset of fuel cells), while a second one of the active sub-modes **52-1, 52-2, 52-3, 52-4,** or the inactive sub-mode **54-1,** is set for other parts of the fuel cell system **20** (such as a second subset of fuel cells). This procedure may optionally be carried out for any number of sub-modes and fuel cell subsets, where a fuel cell subset includes one or more fuel cells of the fuel cell stack **22**.

In some examples, either one of the active mode **52** (including its sub-modes **52-1, 52-2**, **52-3**, **52-4**) or the inactive mode **54** (including its sub-mode **54-1**) may be associated with a delayed mode **56**. The delayed mode **56** involves configuring a timer that delays the activation or the inactivation of the fuel cell system **20**.

The charging mode **50** may be set to the active mode **52** upon the maximum feasible fuel cell power output **230** is higher than or equal to the minimum power limit of the fuel cell system **20**. The charging mode **50** may be set to an inactive mode **54** upon the maximum feasible fuel cell power output **230** is less than the minimum power limit of the fuel cell system **20**. To this end, depending on the value of the maximum fuel cell power output **230** in relation to the minimum power limit of the fuel cell system **20**, the charging mode **50** is set as either one of the active mode **52** (and optionally one of its sub-modes **52-1, 52-2, 52-3, 52-4** as described above) or the inactive mode **54** (and optionally its sub-mode **54-1** as described above).

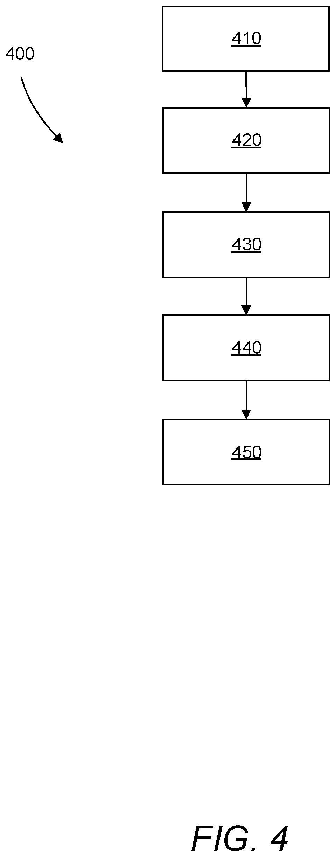

**FIG. 4** is a flowchart of a computer-implemented method **400** for controlling a fuel cell system, such as the fuel cell system **20**, during a vehicle stop of a vehicle, such as the FCEV **10**. The method **400** may involve a step **410** of obtaining a stop duration of the vehicle stop. The method **400** may involve a step **420** of calculating a storage capacity of a vehicle battery, such as the vehicle battery **32**, of the vehicle as a difference between a current state of charge of the vehicle battery and a target state of charge of the vehicle battery at the end of the stop duration. The method **400** may involve a step **430** of calculating a battery charging energy for the vehicle battery based on the storage capacity. The method **400** may involve a step **440** of determining a maximum feasible fuel cell power output of the fuel cell system for charging the vehicle battery using (or by, or based on) the battery charging energy. The method **400** may involve a step **450** of controlling a charging mode of the fuel cell system based on the maximum feasible fuel cell power. The steps **410**, **420**, **430**, **440**, **450** of the method **400** may be carried out by processing circuitry of a computer system, such as the computer system **100** and processing circuitry **102**.

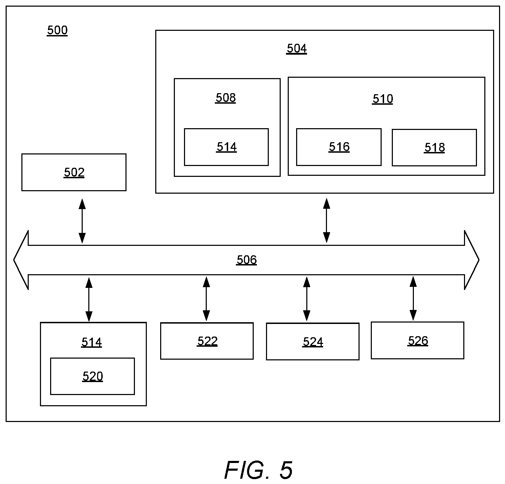

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504**, and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500**.

The computer system **500** may further include or be coupled to a non-transitory computer-readable storage medium such as the storage device **514**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510**, which may include an operating system **516** and/or one or more program modules **518**. All or a portion of the examples disclosed herein may be implemented as a computer program **520** stored on a transitory or non-transitory computer-usable or computer-readable storage medium (e.g., single medium or multiple media), such as the storage device **514**, which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **422** configured to receive input and selections to be communicated to the computer system **500** when executing instructions, such as from a keyboard, mouse, touch-sensitive surface, etc. Such input devices may be connected to the processing circuitry **502** through the input device interface **422** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

Example 1: A computer system (100; 500) for controlling a fuel cell system (20) during a vehicle stop of a vehicle (10), the computer system (100; 500) comprising processing circuitry (102; 502) configured to: obtain a stop duration of the vehicle stop; calculate a storage capacity of a vehicle battery (32) of the vehicle (10) as a difference between a current state of charge of the vehicle battery (32) and a target state of charge of the vehicle battery (32) at the end of the stop duration; calculate a battery charging energy for the vehicle battery (32) based on the storage capacity; determine a maximum feasible fuel cell power output of the fuel cell system (20) for charging the vehicle battery (32) using the battery charging energy; and control a charging mode (50) of the fuel cell system (20) based on the maximum feasible fuel cell power.

Example 2: The computer system (100; 500) of example 1, wherein the processing circuitry (102; 502) is configured to control the charging mode (50) by: setting the charging mode (50) to an active mode (52) or an inactive mode (54) based on a value of the maximum feasible fuel cell power output in relation to a minimum power limit of the fuel cell system (20).

Example 3: The computer system (100; 500) of example 2, wherein the active mode (52) includes a maximum feasible throughput mode (52-1), an adjusted throughput mode (52-2), a varying throughput mode (52-3), or a minimum feasible throughput mode (52-4).

Example 4: The computer system (100; 500) of any of examples 2-3, wherein the inactive mode (54) includes an at least partial shutdown mode (54-1).

Example 5: The computer system (100; 500) of any one of examples 3-4, wherein the active mode (52) or the inactive mode (54) is further associated with a delayed mode (56) for delaying the activation of either one of the active mode (52) or the inactive mode (54).

Example 6: The computer system (100; 500) of any of examples 2-5, wherein the processing circuitry (102; 502) is further configured to employ an optimization model being configured to: receive input data pertaining to the vehicle battery (32) and the stop duration, process said input data, and set the charging mode (50) based on the processed input data.

Example 7: The computer system (100; 500) of any of examples 1-6, wherein the processing circuitry (102; 502) is configured to obtain the current state of charge from a battery management system (30) of the vehicle (10).

Example 8: The computer system (100; 500) of any of examples 1-7, wherein the processing circuitry (102; 502) is configured to obtain the target state of charge from an auxiliary vehicle system (40) of the vehicle (10).

Example 9: The computer system (100; 500) of any of examples 1-8, wherein the target state of charge is dependent on at least one driving property of the vehicle (10) and/or environment where the vehicle (10) will be driving after the stop duration has elapsed.

Example 10: The computer system (100; 500) of example 9, wherein the driving property is a slope of a road, a road surface condition, a traffic situation or an ambient condition.

Example 11: The computer system (100; 500) of any of examples 1-10, wherein the processing circuitry (102; 502) is configured to calculate the battery charging energy as a product of the storage capacity and a nominal capacity of the vehicle battery (32).

Example 12: The computer system (100; 500) of any of examples 1-11, wherein the processing circuitry (102; 502) is further configured to obtain the stop duration as one or more inputs from a driver, a mission management system, and/or a prediction algorithm.

Example 13: The computer system (100; 500) of any of examples 1-12, wherein the maximum feasible fuel cell power for charging the vehicle battery (32) is further based on energy losses of one or more auxiliary vehicle systems (40) of the vehicle (10).

Example 14: The computer system (100; 500) of any of examples 1-13, wherein the maximum feasible fuel cell power for charging the vehicle battery (32) is limited by fuel limitations of the fuel cell system (20).

Example 15: The computer system (100; 500) of any of examples 1-14, wherein the maximum feasible fuel cell power for charging the vehicle battery (32) is limited by safety parameters of the vehicle (10).

Example 16: A vehicle (10) comprising the computer system (100; 500) of any of examples 1-15.

Example 17: The vehicle (10) of example 16, further comprising: a fuel cell system (20) comprising a fuel cell stack (22); a battery management system (30) comprising a vehicle battery (32); and an auxiliary vehicle system (40).

Example 18: A computer-implemented method (400) for controlling a fuel cell system during a vehicle stop of a vehicle, comprising: obtaining (410), by processing circuitry (102; 502) of a computer system (100; 500), a stop duration of the vehicle stop; calculating (420), by the processing circuitry (102; 502), a storage capacity of a vehicle battery (32) of the vehicle (10) as a difference between a current state of charge of the vehicle battery (32) and a target state of charge of the vehicle battery (32) at the end of the stop duration; calculating (430), by the processing circuitry (102; 502), a battery charging energy for the vehicle battery (32) based on the storage capacity; determining (440), by the processing circuitry (102; 502), a maximum feasible fuel cell power output of the fuel cell system (20) for charging the vehicle battery (32) using the battery charging energy; and controlling (450), by the processing circuitry (102; 502), a charging mode (50) of the fuel cell system (20) based on the maximum feasible fuel cell power.

Example 19: A computer program product comprising program code for performing, when executed by the processing circuitry (102; 502), the method (200) of example 18.

Example 20: A non-transitory computer-readable storage medium comprising instructions, which when executed by the processing circuitry (102; 502), cause the processing circuitry (102; 502) to perform the method (400) of example 18.

## Claims

1. A computer system (100; 500) for controlling a fuel cell system (20) during a vehicle stop of a vehicle (10), the computer system (100; 500) comprising processing circuitry (102; 502) configured to:
obtain a stop duration of the vehicle stop;
calculate a storage capacity (210) of a vehicle battery (32) of the vehicle (10) as a difference between a current state of charge of the vehicle battery (32) and a target state of charge of the vehicle battery (32) at the end of the stop duration;
calculate a battery charging energy (220) for the vehicle battery (32) based on the storage capacity (210);
determine a maximum feasible fuel cell power output (230) of the fuel cell system (20) for charging the vehicle battery (32) using the battery charging energy (220); and
control a charging mode (50) of the fuel cell system (20) based on the maximum feasible fuel cell power output (230).

2. The computer system (100; 500) of claim 1, wherein the processing circuitry (102; 502) is configured to control the charging mode (50) by setting the charging mode (50) to an active mode (52) or an inactive mode (54) based on a value of the maximum feasible fuel cell power output (230) in relation to a minimum power limit of the fuel cell system (20).

3. The computer system (100; 500) of claim 2, wherein the active mode (52) includes a maximum feasible throughput mode (52-1), an adjusted throughput mode (52-2), a varying throughput mode (52-3), or a minimum feasible throughput mode (52-4).

4. The computer system (100; 500) of any of claims 2-3, wherein the inactive mode (54) includes an at least partial shutdown mode (54-1).

5. The computer system (100; 500) of any one of claims 3-4, wherein the active mode (52) or the inactive mode (54) is further associated with a delayed mode (56) for delaying the activation of either one of the active mode (52) or the inactive mode (54).

6. The computer system (100; 500) of any of claims 2-5, wherein the processing circuitry (102; 502) is further configured to employ an optimization model being configured to:
receive input data pertaining to the vehicle battery (32) and the stop duration,
process said input data, and
set the charging mode (50) based on the processed input data.

7. The computer system (100; 500) of any of claims 1-6, wherein the target state of charge is dependent on at least one driving property of the vehicle (10) and/or environment where the vehicle (10) will be driving after the stop duration has elapsed, the driving property being a slope of a road, a road surface condition, a traffic situation or an ambient condition.

8. The computer system (100; 500) of any of claims 1-7, wherein the processing circuitry (102; 502) is configured to calculate the battery charging energy as a product of the storage capacity and a nominal capacity of the vehicle battery (32).

9. The computer system (100; 500) of any of claims 1-8, wherein the maximum feasible fuel cell power for charging the vehicle battery (32) is further based on energy losses of one or more auxiliary vehicle systems (40) of the vehicle (10).

10. The computer system (100; 500) of any of claims 1-9, wherein the maximum feasible fuel cell power for charging the vehicle battery (32) is limited by fuel limitations of the fuel cell system (20).

11. The computer system (100; 500) of any of claims 1-10, wherein the maximum feasible fuel cell power for charging the vehicle battery (32) is limited by safety parameters of the vehicle (10).

12. A vehicle (10) comprising the computer system (100; 500) of any of claims 1-11.

13. A computer-implemented method (400) for controlling a fuel cell system during a vehicle stop of a vehicle, comprising:
obtaining (410), by processing circuitry (102; 502) of a computer system (100; 500), a stop duration of the vehicle stop;
calculating (420), by the processing circuitry (102; 502), a storage capacity of a vehicle battery (32) of the vehicle (10) as a difference between a current state of charge of the vehicle battery (32) and a target state of charge of the vehicle battery (32) at the end of the stop duration;
calculating (430), by the processing circuitry (102; 502), a battery charging energy for the vehicle battery (32) based on the storage capacity;
determining (440), by the processing circuitry (102; 502), a maximum feasible fuel cell power output of the fuel cell system (20) for charging the vehicle battery (32) using the battery charging energy; and
controlling (450), by the processing circuitry (102; 502), a charging mode (50) of the fuel cell system (20) based on the maximum feasible fuel cell power.

14. A computer program product comprising program code for performing, when executed by the processing circuitry (102; 502), the method (200) of claim 13.

15. A non-transitory computer-readable storage medium comprising instructions, which when executed by the processing circuitry (102; 502), cause the processing circuitry (102; 502) to perform the method (400) of claim 13.

## Amended claims

### Amended claims in accordance with Rule 137(2) EPC.

1. A computer system (100; 500) for controlling a fuel cell system (20) during a vehicle stop of a vehicle (10), the computer system (100; 500) comprising processing circuitry (102; 502) configured to:
obtain a stop duration of the vehicle stop;
calculate a storage capacity (210) of a vehicle battery (32) of the vehicle (10) as a difference between a current state of charge of the vehicle battery (32) and a target state of charge of the vehicle battery (32) at the end of the stop duration, wherein the target state of charge is dependent on at least one driving property of the vehicle (10) and/or environment where the vehicle (10) will be driving after the stop duration has elapsed, the driving property being a slope of a road, a road surface condition, a traffic situation or an ambient condition;
calculate a battery charging energy (220) for the vehicle battery (32) based on the storage capacity (210);
determine a maximum feasible fuel cell power output (230) of the fuel cell system (20) for charging the vehicle battery (32) using the battery charging energy (220); and
control a charging mode (50) of the fuel cell system (20) based on the maximum feasible fuel cell power output (230).

2. The computer system (100; 500) of claim 1, wherein the processing circuitry (102; 502) is configured to control the charging mode (50) by setting the charging mode (50) to an active mode (52) or an inactive mode (54) based on a value of the maximum feasible fuel cell power output (230) in relation to a minimum power limit of the fuel cell system (20).

3. The computer system (100; 500) of claim 2, wherein the active mode (52) includes a maximum feasible throughput mode (52-1), an adjusted throughput mode (52-2), a varying throughput mode (52-3), or a minimum feasible throughput mode (52-4).

4. The computer system (100; 500) of any of claims 2-3, wherein the inactive mode (54) includes an at least partial shutdown mode (54-1).

5. The computer system (100; 500) of any one of claims 3-4, wherein the active mode (52) or the inactive mode (54) is further associated with a delayed mode (56) for delaying the activation of either one of the active mode (52) or the inactive mode (54).

6. The computer system (100; 500) of any of claims 2-5, wherein the processing circuitry (102; 502) is further configured to employ an optimization model being configured to:
receive input data pertaining to the vehicle battery (32) and the stop duration,
process said input data, and
set the charging mode (50) based on the processed input data.

7. The computer system (100; 500) of any of claims 1-6, wherein the processing circuitry (102; 502) is configured to calculate the battery charging energy as a product of the storage capacity and a nominal capacity of the vehicle battery (32).

8. The computer system (100; 500) of any of claims 1-7, wherein the maximum feasible fuel cell power for charging the vehicle battery (32) is further based on energy losses of one or more auxiliary vehicle systems (40) of the vehicle (10).

9. The computer system (100; 500) of any of claims 1-8, wherein the maximum feasible fuel cell power for charging the vehicle battery (32) is limited by fuel limitations of the fuel cell system (20).

10. The computer system (100; 500) of any of claims 1-9, wherein the maximum feasible fuel cell power for charging the vehicle battery (32) is limited by safety parameters of the vehicle (10).

11. A vehicle (10) comprising the computer system (100; 500) of any of claims 1-10.

12. A computer-implemented method (400) for controlling a fuel cell system during a vehicle stop of a vehicle, comprising:
obtaining (410), by processing circuitry (102; 502) of a computer system (100; 500), a stop duration of the vehicle stop;
calculating (420), by the processing circuitry (102; 502), a storage capacity of a vehicle battery (32) of the vehicle (10) as a difference between a current state of charge of the vehicle battery (32) and a target state of charge of the vehicle battery (32) at the end of the stop duration, wherein the target state of charge is dependent on at least one driving property of the vehicle (10) and/or environment where the vehicle (10) will be driving after the stop duration has elapsed, the driving property being a slope of a road, a road surface condition, a traffic situation or an ambient condition;
calculating (430), by the processing circuitry (102; 502), a battery charging energy for the vehicle battery (32) based on the storage capacity;
determining (440), by the processing circuitry (102; 502), a maximum feasible fuel cell power output of the fuel cell system (20) for charging the vehicle battery (32) using the battery charging energy; and
controlling (450), by the processing circuitry (102; 502), a charging mode (50) of the fuel cell system (20) based on the maximum feasible fuel cell power.

13. A computer program product comprising program code for performing, when executed by the processing circuitry (102; 502), the method (200) of claim 12.

14. A non-transitory computer-readable storage medium comprising instructions, which when executed by the processing circuitry (102; 502), cause the processing circuitry (102; 502) to perform the method (400) of claim 12.
